# EUROPÄISCHE PATENTANMELDUNG

(11) **EP 0 798 197 A1**
(43) Veröffentlichungstag der Anmeldung: **01.10.1997**
(21) Anmeldenummer: 97102382.5
(22) Anmeldetag: 14.02.1997
(51) Int. Cl.: B62D 25/08

(54) **Frondmodul für Kraftfahrzeuge**

(30) Priorität: 27.03.1996 DE 19611934
(71) Anmelder: YMOS AKTIENGESELLSCHAFT Industrieprodukte, 63179 Obertshausen (DE)
(72) Erfinder: Morbach, Nikolaus, 63814 Mainaschaff (DE); Hock, Michael, 63762 Grossostheim (DE); Schmidt, Stefan, 63768 Hösbach (DE); Rutsaert, Thibaud, 63857 Waldaschaff (DE)
(74) Vertreter: Podszus, Burghart, Dipl.-Phys., Dipl.-Wirtsch.-Ing.

(57) **Zusammenfassung**

Die Erfindung betrifft ein Frontmodul für Kraftfahrzeuge mit jeweils einem unteren als Aufprallträger und einem oberen als Funktionsträger ausgebildeten Querträger (2;3), wobei die beide Querträger (2;3) mit entsprechenden unteren und oberen Längsträgern (6,7;8,9) der Fahrzeugkarosserie verbindbar sind und wobei zwischen dem unteren Querträger (2) und den an ihm befestigbaren Längsträgern (6,7) Aufpralldämpfer (4,5) angeordnet sind.

Um zu erreichen, daß das Frontmodul (1) eine hohe Stabilität bei Unfällen aufweist, reparaturfreundlich ist und ein optimales Aufprallverhalten sowohl bei einem Unterfahr- als auch bei einem Hochgeschwindigkeits-Aufprall besitzt, schlägt die Erfindung vor, daß die beiden Querträger (2,3) des Frontmodules (1) einen biegesteifen Rahmenverbund miteinander bilden. Dieser besteht aus zwei biegesteif befestigten Druckstreben (10,11,31) und zwei zusätzlichen Zugstreben (12,13,33,36). Dabei sind die dem unteren Querträger (2) zugewandten Enden (14) der entsprechenden Druckstreben (10,11,31) an den den unteren Längsträgern der Fahrzeugkarosserie zugewandten Enden (15) der Aufpralldämpfer (4,5) angeordnet.

## Beschreibung

Die Erfindung betrifft ein Frontmodul für Kraftfahrzeuge mit jeweils einem unteren als Aufprallträger und einem oberen als Funktionsträger ausgebildeten Querträger.

Bei bekannten Kraftfahrzeug-Frontmodulen in Rahmenbauweise dienen die unteren Querträger in erster Linie als Aufprallträger und sind über Aufpralldämpfer (Crashboxen) und entsprechende untere Längsträger mit der jeweiligen Fahrgastzelle verbunden. Demgegenüber dienen die oberen Querträger zur Versteifung und Formgebung des Frontmodules als auch als Schloßträger zur Aufnahme des Fanghakens für die Verriegelung der Motorraumabdeckung sowie als Befestigungsvorrichtung für die Leuchtenhalterungen und des Kühlergitterbleches etc.

Bei den bisher vorgeschlagenen Frontmodulen der eingangs erwähnten Art wird die bei einem Aufprall (Crash) des entsprechenden Fahrzeuges auf ein Hindernis auftretende Wirkung des unteren Querträgers auf die obere aus Querträger und Längsträgern bestehende Trägerebene bei der konstruktiven Ausgestaltung des Frontmodules kaum berücksichtigt. Gleiches gilt auch für die bei einem Unterfahr-Aufprall (typischer Fall: ein Personenfahrzeug gerät unter einen Lastkraftwagen) auftretende Wirkung des oberen Querträgers auf die untere Längsträgerebene.

Der Erfindung liegt die Aufgabe zugrunde, ein Frontmodul der eingangs erwähnten Art anzugeben, welches eine hohe Stabilität bei Unfällen aufweist, reparaturfreundlich ist und ein optimales Aufprallverhalten sowohl bei einem Unterfahr- als auch bei einem Hochgeschwindigkeits-Aufprall besitzt.

Diese Aufgabe wird erfindungsgemäß durch die Merkmale des Anspruchs 1 gelöst. Weitere besonders vorteilhafte Ausgestaltungen der Erfindung offenbaren die Unteransprüche.

Die Erfindung beruht im wesentlichen auf dem Gedanken, daß die beiden Querträger des Frontmodules einen biegesteifen Rahmenverbund miteinander bilden. Dieser besteht aus zwei biegesteif befestigten Druckstreben und zwei Zugstreben. Dabei sind die dem unteren Querträger zugewandten Enden der Druckstreben an den den unteren Längsträgern der Fahrzeugkarosserie zugewandten Enden entsprechender Aufpralldämpfer angeordnet.

Im Falle eines Unterfahr-Aufpralles entsteht eine Druckbelastung auf dem oberen Querträger, welche durch die Druckstreben auf die untere, relativ biegesteife Trägerebene übertragen und von dieser abgefangen wird. Gleichzeitig erfolgt eine Biegebelastung auf die Anbindungspunkte der Druckstreben aufgrund der in Richtung der Fahrzeuglängsachse wirkenden Kraftkomponente. Durch den Einsatz der Zugstreben werden diese Anbindungspunkte entlastet. Die Zugstreben belasten im wesentlichen ebenfalls nur die untere Trägerebene.

Bei einer Belastungseinwirkung auf die untere Trägerebene, etwa bei einem Frontaufprall mit einer Geschwindigkeit bis zu 15 km/h, erfolgt die Energieaufnahme des Aufpralls durch die zwischen den unteren Längsträgern und dem unteren Querträger angeordneten Aufpralldämpfer. Um dabei möglichst keine Belastung der oberen Trägerebene zu erhalten, werden die erwähnten Zugstreben mit Sollbiegestellen versehen oder es werden als Zugstreben Seile verwendet. Da die unteren Enden der Druckstreben außerdem an den den Längsträgern zugewandten Enden der Aufpralldämpfer angeordnet sind, erfolgt eine Deformation der oberen Trägerebene erst nach vollständiger Ausnutzung der Aufpralldämpferdeformationen.

Bei einem vorteilhaften Ausführungsbeispiel sind die Aufpralldämpfer zur Befestigung mit den unteren Längsträgern mit Flanschen versehen, welche jeweils eine zusätzliche obere horizontale Flanschplatte zur Abstützung des unteren Endes der jeweiligen Druckstrebe aufweisen.

Zusätzlich zu der oberen Flanschplatte kann der Flansch des jeweiligen Aufpralldämpfers auch eine untere horizontale Flanschplatte besitzen, an welcher beispielsweise eine Kühlerhalterung befestigbar ist.

Um sicherzustellen, daß die bei einem Aufprall in Richtung der Fahrzeuglängsachse auf die oberen Längsträger wirkenden Kräfte im unteren und mittleren Geschwindigkeitsbereich zu keinen Verformungen der Längsträger führen, können zwischen dem oberen Querträger und den entsprechenden Längsträgern ebenfalls Aufpralldämpfer angeordnet sein.

Vorteilhafterweise haben sich Querträger bewährt, die aus einem Aluminium-Strangpreßprofil bestehen. Derartige Träger sind leicht und auf einfache Weise herstellbar. Vorzugsweise sollte der obere Querträger sich in Längsrichtung des Trägers erstreckende Funktionsleisten enthalten, in die Gleitsteine zwecks Befestigung von Funktionsbauteilen einschiebbar sind.

Weitere Einzelheiten und Vorteile der Erfindung ergeben sich aus den folgenden anhand von Figuren erläuterten Ausführungsbeispielen. Es zeigen:
- Fig.1: eine perspektivische Ansicht eines ersten Ausführungsbeispieles eines erfindungsgemäßen Frontmoduls schräg von hinten, wobei der linke Teil im zusammengebauten Zustand und der rechte Teil des Moduls vor dem Zusammenbau der Teile dargestellt ist,
- Fig.2: das in Fig.1 dargestellte Frontmodul schräg von vorne ohne den oberen Querträger,
- Fig.3: eine perspektivische Ansicht des mit Druck- und Zugstreben versehenen Bereiches eines zweiten Ausführungsbeispieles eines erfindungsgemäßen Frontmoduls,
- Fig.4 und 5: zwei Ansichten einer als Seil ausgestalteten Zugstrebe für ein erfindungsgemäßes Frontmodul.

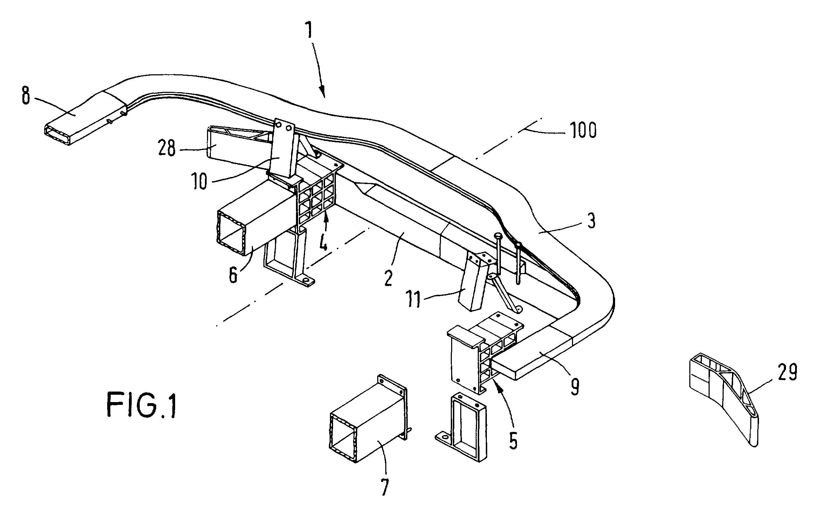

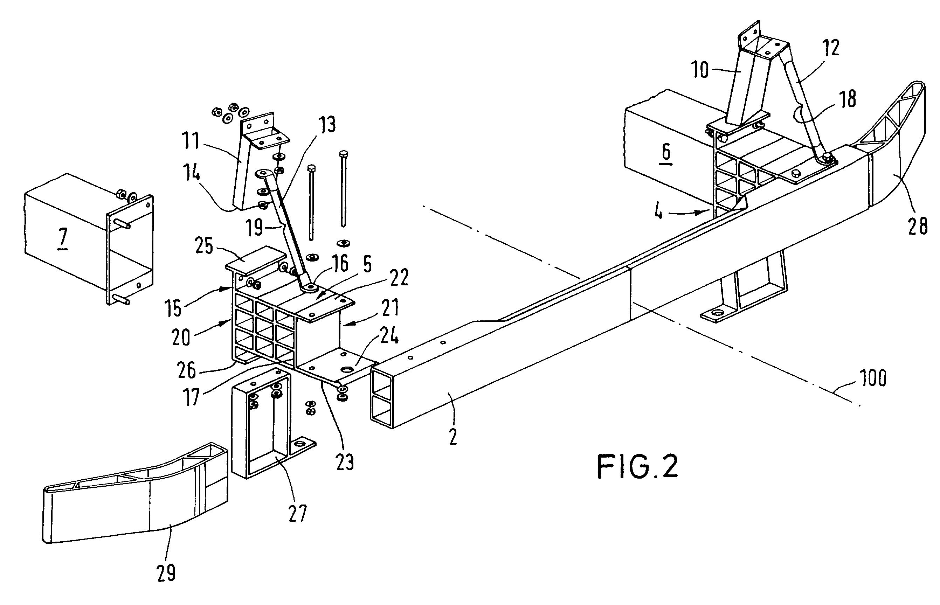

In Fig.1 ist mit 1 ein erfindungsgemäßes Frontmodul für den Vorderwagen eines Fahrzeuges bezeichnet. Das Frontmodul 1 besteht im wesentlichen aus einem unteren als Aufprallträger ausgebildeten Querträger 2 (vgl. auch Fig. 2) und einem oberen als Funktionsträger ausgebildeten Querträger 3. Während der untere Querträger 2 über zwei Aufpralldämpfer 4, 5 mit entsprechenden unteren Längsträgern 6, 7 des jeweiligen Vorderwagens verbunden ist, ist der obere Querträger 3 direkt an entsprechenden oberen Längsträgern 8, 9 des Vorderwagens befestigt (Fig.1).

Zwischen den unteren und oberen Querträgern 2 und 3 sind zwei Druck- und zwei Zugstreben 10, 11 und 12, 13 angeordnet (Fig.2). Dabei sind die dem unteren Querträger 2 zugewandten unteren Enden 14 der Druckstreben 10, 11 jeweils an den den unteren Längsträgern 6, 7 des Vorderwagens zugewandten Enden 15 der Aufpralldämpfer 4, 5 angeordnet. Die dem unteren Querträger 2 zugewandten Enden 16 der Zugstreben 12, 13 sind hingegen an den dem unteren Querträger 2 zugewandten Enden 17 der Aufpralldämpfer 4, 5 befestigt.

Durch diese Anordnung von Druck- und Zugstreben 10-13 wird erreicht, daß im Falle eines Unterfahr-Aufpralles die auf dem oberen Querträger 3 (Fig.1) sich ausbildende Druckbelastung auf die untere, relativ biegesteife Trägerebene übertragen wird. Gleichzeitig wird die dabei auftretende Biegebelastung auf die Anbindungspunkte der Druckstreben 10, 11 durch die Zugstreben 12, 13 gemindert.

Die Druckstreben 10, 11 besitzen aufgrund ihrer Geometrie eine hohe Knicksteifigkeit, was z.B. durch ein Hohlprofil mit rundem, ovalem oder vierkantigem Querschnitt erreicht wird.

Bei einer Belastungseinwirkung auf den unteren Querträger 2 in Richtung der Fahrzeuglängsachse 100 erfolgt die Energieaufnahme des Aufpralls durch die zwischen den unteren Längsträgern 6, 7 und dem unteren Querträger 2 angeordneten Aufpralldämpfer 4, 5. Um dabei möglichst keine Belastung auf die obere Trägerebene zu erhalten, sind die Zugstreben 12, 13 mit Sollbiegestellen versehen, die in Fig.2 nur schematisch angedeutet und mit den Bezugszeichen 18, 19 versehen sind.

Wie vor allem aus Fig.2 entnehmbar ist, sind die Aufpralldämpfer 4, 5 an ihren Enden 15, 17 mit Flanschen 20 bzw. Haltevorrichtungen 21 zur Verbindung mit dem unteren Querträger 2 und den Längsträgern 6, 7 versehen. Dabei sind die Haltevorrichtungen 21 zur Verbindung des jeweiligen Aufpralldämpfers 4, 5 mit dem unteren Querträger 2 U-förmig ausgebildet, wobei die beiden Schenkel 22, 23 der jeweiligen Haltevorrichtung 21 den unteren Querträger 2 umfassen und mit diesem verschraubbar sind. Der mit 23 bezeichnete Schenkel der an dem Aufpralldämpfer 5 angeordneten Haltevorrichtung 21 ist etwas länger ausgebildet als der Schenkel 22 und steht nach der Montage vorderseitig vor dem unteren Querträger 2 etwas hervor. Dieser Schenkel ist vorderseitig mit einer Abschleppöse 24 versehen.

Durch eine derartige erfindungsgemäße Ausgestaltung der Haltevorrichtung 21 können Abschleppösen 24 auf besonders einfache Weise an dem Frontmodul angeordnet werden. Insbesondere wenn es sich bei dem gesamten Aufpralldämpfer 4, 5 einschließlich der Haltevorrichtungen 21 um ein Leichtmetall-Strangpreßprofil handelt, ist die Herstellung der Abschleppösen 24 außerordentlich kostengünstig. Demgegenüber handelt es sich bei herkömmlichen Abschleppösen um separate Teile, die zusätzlich an den Quer- oder Längsträgern befestigt werden müssen.

An den Flanschen 20 der Aufpralldämpfer 4, 5 zur Befestigung des jeweiligen Aufpralldämpfers mit dem entsprechenden unteren Längsträger 6, 7 ist eine zusätzliche obere horizontale Flanschplatte 25 angeordnet, an welcher sich das untere Ende 14 der jeweiligen Druckstrebe 10, 11 abstützt. Vorzugsweise ist die jeweilige Druckstrebe 10, 11 mit der entsprechenden Flanschplatte 25 verschweißt.

Außerdem ist an dem Flansch 20 des jeweiligen Aufpralldämpfers 4, 5 eine untere horizontale Flanschplatte 26 vorgesehen, an welcher eine Kühlerhalterung 27 befestigbar ist.

Wie Fig.2 ferner entnehmbar ist, handelt es sich bei den seitlichen Enden 28, 29 des unteren Querträgers 2 um separate gebogene Teile (Biegeträger), die an die seitliche Kontur des Fahrzeuges angepaßt und als quergepreßte Hohlprofile herstellbar sind.

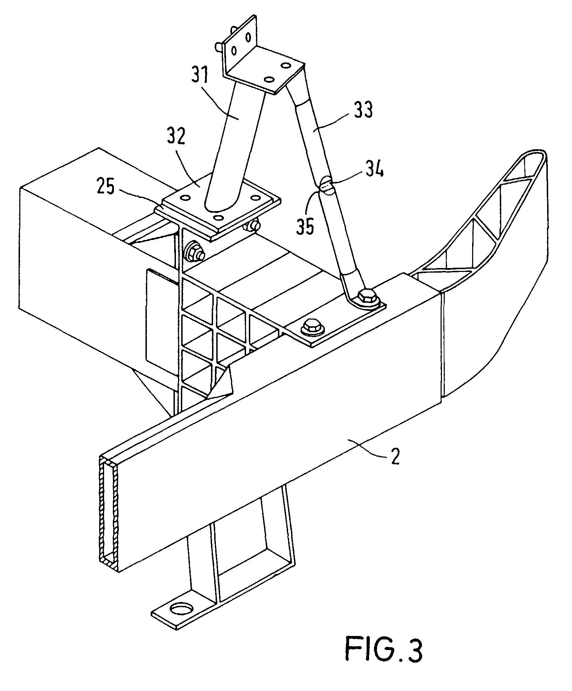

In Fig.3 ist ein weiteres Ausführungsbeispiel dargestellt, welches im wesentlichen dem in Fig.1 und 2 dargestellten Ausführungsbeispiel entspricht. Allerdings ist die jeweilige mit 31 bezeichnete Druckstrebe mit einer Flanschplatte 32 versehen, welche mit der oberen Flanschplatte 25 des Aufpralldämpfers 5 verschraubbar ist. Die mit 33 bezeichnete Zugstrebe weist zwei gegenüberliegende Sollbiegestellen 34, 35 auf.

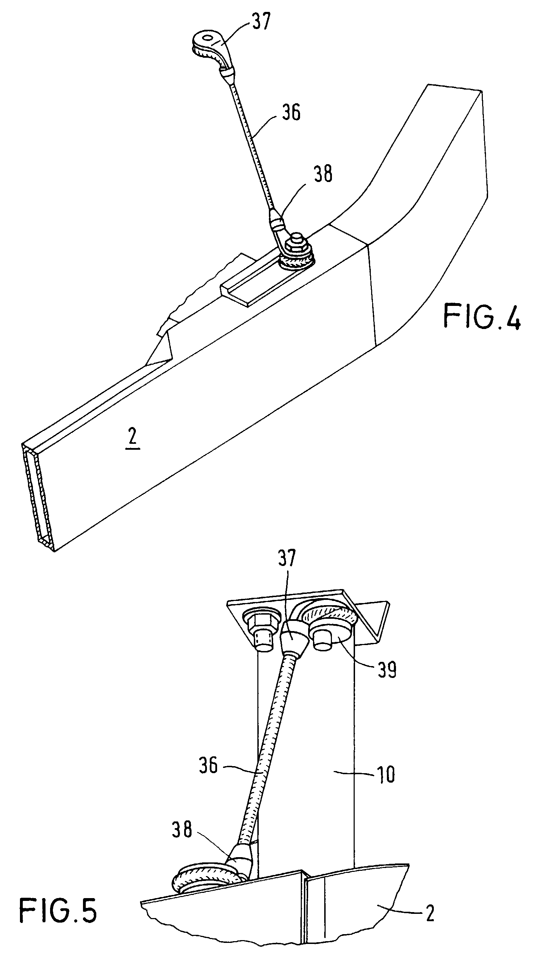

Wie den Fig.4 und 5 zu entnehmen ist, können die Zugstreben auch als Seile 36 ausgestaltet sein. Die Zugseile 36 können, je nach geforderter Beanspruchung, aus einem Aluminium-, Stahl- oder Kunststoffgeflecht bestehen. Zur Anbindung an die Träger sind Seilverbinder 37, 38 vorgesehen. Die Seile 36 werden analog den verprägten Zugstreben 12, 13 (Fig. 2) mit der jeweiligen Druckstrebe 10 (Fig. 5) am oberen Querträger 3 (Fig.1) verschraubt. Um ein Flattern des jeweiligen Zugseiles 36 zu verhindern ist eine Exzenterschraube 39 vorgesehen, bei deren Drehung das Seil 36 gespannt wird.

### Bezugszeichenliste

- 1: Frontmodul
- 2: unterer Querträger
- 3: oberer Querträger
- 4,5: Aufpralldämpfer
- 6,7: untere Längsträger
- 8,9: obere Längsträger
- 10,11: Druckstreben
- 12,13: Zugstreben
- 14: unteres Ende (Druckstrebe)
- 15: Ende (Aufpralldämpfer)
- 16: unteres Ende (Zugstrebe)
- 17: Ende (Aufpralldämpfer)
- 18,19: Sollbiegestellen
- 20: Flansch
- 21: Haltevorrichtung
- 22,23: Schenkel
- 24: Abschleppöse
- 25: obere Flanschplatte
- 26: untere Flanschplatte
- 27: Kühlerhalterung
- 28,29: seitliche Enden (unterer Querträger)
- 31: Druckstrebe
- 32: Flanschplatte
- 33: Zugstrebe
- 34,35: Sollbiegestellen
- 36: Zugseil
- 37,38: Seilverbinder
- 39: Exzenterschraube
- 100: Fahrzeuglängsachse

## Patentansprüche

1. Frontmodul für Kraftfahrzeuge mit jeweils einem unteren als Aufprallträger und einem oberen als Funktionsträger ausgebildeten Querträger (2; 3) mit folgenden Merkmalen:
a) beide Querträger (2;3) sind in ihren Endbereichen mit entsprechenden unteren und oberen Längsträgern (6,7;8,9) der Fahrzeugkarosserie verbindbar;
b) zwischen dem unteren Querträger (2) und den an ihm befestigbaren unteren Längsträgern (6,7) der Fahrzeugkarosserie sind Aufpralldämpfer (4,5) angeordnet;
c) der untere und der obere Querträger (2;3) sind jeweils über mindestens zwei Druck- und Zugstreben (10,11,31;12,13,33,36) miteinander verbunden;
d) die dem unteren Querträger (2) zugewandten Enden (14) der Druckstreben (10,11,31) sind an den den unteren Längsträgern (6,7) der Fahrzeugkarosserie zugewandten Enden (15) der Aufpralldämpfer (4,5) angeordnet;
e) die dem unteren Querträger (2) zugewandten Enden (16) der Zugstreben (12,13,33,36) sind entweder direkt an dem unteren Querträger (2) oder an den dem Querträger (2) zugewandten Enden (17) der Aufpralldämpfer (4,5) befestigt.

2. Frontmodul nach Anspruch 1, **dadurch gekennzeichnet**, daß die Druckstreben (10,11,31) zur Erhöhung der Knicksteifigkeit als Hohlprofile ausgebildet sind und einen runden, ovalen oder mehreckigen Querschnitt aufweisen.

3. Frontmodul nach Anspruch 1 oder 2, **dadurch gekennzeichnet**, daß die Zugstreben (12,13,33) mit Sollbiegestellen (18,19, 34,35) versehen sind, derart, daß bei einem Aufprall des entsprechenden Fahrzeuges auf ein Hindernis sich durch die Verschiebung des unteren Querträgers (2) in Richtung der Fahrzeuglängsachse (100) keine Belastung der oberen aus Längsträgern (8,9) und Querträger (3) bestehenden Trägerebene ergibt.

4. Frontmodul nach Anspruch 1 oder 2, **dadurch gekennzeichnet**, daß es sich bei den Zugstreben (36) um Seile handelt.

5. Frontmodul nach Anspruch 4, **dadurch gekennzeichnet**, daß das Zugseil (36) aus einem Aluminium-, Stahl- oder Kunststoffgeflecht besteht.

6. Frontmodul nach Anspruch 4 oder 5, **dadurch gekennzeichnet**, daß das Zugseil (36) über eine Exzenterschraube (39) mit dem jeweiligen Träger (2,3) bzw. der entsprechenden Druckstrebe (10,11,31) verbunden ist.

7. Frontmodul nach einem der Ansprüche 1 bis 6, **dadurch gekennzeichnet**, daß an den den unteren Längsträgern (6,7) der Fahrzeugkarosserie zugewandten Enden (15) der Aufpralldämpfer (4,5) jeweils ein Flansch (20) zur Befestigung des entsprechenden Längsträgers (6,7) vorgesehen ist, an dem eine zusätzliche obere horizontale Flanschplatte (25) angeordnet ist, an welcher sich das untere Ende (14) der jeweiligen Druckstrebe (10,11,31) abstützt.

8. Frontmodul nach einem der Ansprüche 1 bis 7, **dadurch gekennzeichnet**, daß es sich bei den Aufpralldämpfern (4,5) um quergepreßte Strangpreßprofile handelt.

9. Frontmodul nach einem der Ansprüche 1 bis 8, **dadurch gekennzeichnet**, daß der jeweilige Aufpralldämpfer (4,5) zur Befestigung an dem unteren Querträger (2) an dem dem Querträger (2) zugewandten Ende (17) eine U-förmig ausgebildete Haltevorrichtung (21) aufweist, daß einer der beiden Schenkel (23) der U-förmigen Haltevorrichtung (21) eine Länge aufweist, die derart gewählt ist, daß der Schenkel vorderseitig vor dem unteren Querträger (2) hervorsteht, und daß dieser Schenkel (22) in seinem vorderen Bereich als Abschleppöse (24) ausgebildet ist.

10. Frontmodul nach Anspruch 9, **dadurch gekennzeichnet**, daß an dem jeweiligen Flansch (20) des Aufpralldämpfers (4,5) zusätzlich eine untere horizontale Flanschplatte (26) angeordnet ist, an welcher eine Kühlerhalterung (27) befestigbar ist.

11. Frontmodul nach einem der Ansprüche 1 bis 10, **dadurch gekennzeichnet**, daß auch der obere Querträger (3) über Aufpralldämpfer mit den oberen Längsträgern (8,9) der Fahrzeugkarosserie verbindbar ist.

12. Frontmodul nach einem der Ansprüche 1 bis 11, **dadurch gekennzeichnet**, daß der obere und/oder untere Querträger (3;2) jeweils aus einem Strangpreßprofil besteht.

13. Frontmodul nach Anspruch 12, **dadurch gekennzeichnet**, daß der obere Querträger (3) sich in Längsrichtung des Querträgers erstreckende Funktionsleisten enthält, in die Gleitsteine zwecks Befestigung von Funktionsbauteilen einschiebbar sind.
